# FASCICULE DE BREVET EUROPEEN

(11) **EP 2 530 013 B1**
(45) Date de publication et mention de la délivrance du brevet: **31.07.2013**
(21) Numéro de dépôt: 12003860.9
(22) Date de dépôt: 16.05.2012
(51) Int. Cl.: B64C 27/467, B64C 3/48, B64C 27/615, B64C 27/46, B64C 27/00

(54) **Mécanisme de vrillage d'une pale de rotor pour giravion, et pale**
Rotorblattverdrehmechanismus für Drehflügelflugzeug, und Blatt
Rotor blade twist mechanism for rotorcraft, and blade

(30) Priorité: 31.05.2011 FR 1101677
(43) Date de publication de la demande: 05.12.2012
(73) Titulaire: EUROCOPTER, 13725 Marignane Cédex (FR)
(72) Inventeur: Hirsch, Jean-Francois, 13090 Aix en Provence (FR)
(74) Mandataire: GPI & Associés

(56) Documents cités:
- EP-A1- 0 734 947
- EP-A1- 1 083 123
- DE-C1- 19 859 041
- GB-A- 627 117
- US-A- 5 505 589
- US-A1- 2007 205 332

## Description

La présente invention est du domaine des aéronefs à voilure tournante, tels que des giravions munis d'au moins un rotor porteur de pales, et relève plus spécifiquement des mécanismes qui équipent de tels rotors pour mettre les pales sous contrainte par vrillage dans leur plan général d'extension. Elle a pour objet un tel mécanisme de vrillage qui est incorporable sur une pale et qui met en oeuvre un actionneur d'un organe de vrillage en prise sur la pale, à son extrémité libre notamment, ainsi que la pale associée.

Les aéronefs à voilure tournante exploitent un rotor pour procurer au moins la sustentation sinon aussi la propulsion. La voilure tournante est composée d'une pluralité de pales qui sont radialement réparties et qui sont individuellement portées par le moyeu du rotor pour leur entraînement en rotation. Une pale de rotor principal d'un giravion exerce une portance lorsqu'elle est entraînée en rotation pour procurer la sustentation du giravion. Des commandes de vol modifient les caractéristiques aérodynamiques des pales pour intervenir sur le comportement du giravion lorsqu'il évolue, en faisant varier l'angle d'inclinaison de leur surface d'extension par rapport au vent relatif.

Une pale est une aile de grand allongement. Une extrémité d'emplanture relative à l'ancrage de la pale est affectée à sa mise en prise sur le moyeu du rotor, son extrémité opposée étant considérée comme étant une extrémité libre. La pale s'étend en envergure selon sa surface d'extension suivant une dimension longitudinale considérée sur un axe longitudinal entre son extrémité d'ancrage et son extrémité libre, et suivant une dimension transversale considérée entre un bord d'attaque et un bord de fuite opposés. La dimension transversale de la pale, en général perpendiculaire à l'axe longitudinal, est définie une corde par rapport à laquelle est ménagée une ligne de cambrure et des lois d'épaisseur de part et d'autre de cette ligne de cambrure pour former respectivement l'extrados et l'intrados de chaque profil de la pale. Selon diverses commandes de vol du giravion, les caractéristiques aérodynamiques des pales sont modifiées en faisant varier leur angle de pas autour de l'axe longitudinal dénommé « axe de pas », orienté suivant leur dimension longitudinale. Une commande de vol cyclique vise à modifier cycliquement l'angle d'incidence des pales pour influer sur l'incidence aérodynamiques de pales et par suite sur la progression du giravion, au regard des mouvements en roulis et en tangage. Une commande de vol modifiant le pas collectif des pales permet de faire varier l'altitude de progression du giravion.

La vitesse de progression du giravion dépend de la dissymétrie des vitesses entre respectivement une pale avançante, qui progresse de l'arrière vers l'avant du giravion, et une pale reculante qui progresse inversement de l'avant vers l'arrière du giravion. L'écoulement de l'air le long du profil des pales est déterminé par la conformation de leur profil, et varie selon la mise en situation des pales au cours de leur rotation en pale avançante ou en pale reculante. Une telle variation de vitesse d'écoulement d'air est couramment compensée à partir d'une variation de l'angle d'incidence des pales, mais il est constaté qu'à partir d'un angle d'incidence donné, la pale reculante est placée en situation de décrochage. La vitesse d'écoulement d'air sur la pale reculante est susceptible d'être très faible voire même négative dans une zone proche du moyeu du rotor. Un décollement des filets d'air en bord d'attaque ou en bord de fuite est induit, avec pour conséquence de provoquer une chute brutale de la portance procurée par la pale si un tel décollement se propage sur une zone d'extension longitudinale de la pale significative au regard de sa longueur. De plus, le décollement des filets d'air génère un tourbillon qui est source de vibrations et d'une augmentation du coefficient de traînée du profil de la pale.

Pour éviter un tel phénomène de décrochage de pale, il est connu de vriller la surface d'extension de la pale suivant sa dimension longitudinale. Le vrillage de la pale est susceptible d'être permanent en étant formé dès sa conception. Il est cependant apparu qu'un vrillage actif de la pale en cours de vol de l'aéronef améliorait la performance de la voilure tournante. Une manoeuvre active des pales peut être adaptée en fonction des conditions d'entraînement de la voilure tournante et de progression du giravion.

Une commande de vrillage de la pale induit une variation progressive de l'incidence de ses profils entre son extrémité libre et son extrémité d'ancrage, ce qui permet d'adapter localement chaque profil de la pale à la vitesse d'écoulement d'air entre son bord d'attaque et son bord de fuite. Selon une organisation générale d'un mécanisme de vrillage de la pale, un organe de vrillage est mis en prise sur la pale entre ses extrémités et plus particulièrement à son extrémité libre. Une manoeuvre de l'organe de vrillage induit une mise sous contrainte en torsion de la pale de l'une à l'autre de ses extrémités en provoquant son vrillage. Pour actionner l'organe de vrillage, le rotor est équipé de moyens de manoeuvre de l'organe de vrillage qui comprennent une source de puissance d'alimentation en énergie d'un actionneur de l'organe de vrillage. Des moyens de commande régulent l'activation de l'actionneur, notamment en fonction des paramètres de vol, en étant mis en oeuvre selon des commandes de vol prédéfinies et/ou sélectivement par le pilote à partir d'organes de commande manuelle.

Par exemple selon le document US5505589 (BERGEY KARL H), l'organe de vrillage est agencé en un lest qui est porté par la pale à son bord d'attaque. Le lest est monté mobile en translation le long de la pale entre ses extrémités, un déplacement du lest par l'actionneur générant localement une contrainte en torsion sur la pale qui induit son vrillage. L'ampleur du vrillage de la pale varie selon la position du lest entre ses extrémités, qui est déplacé par l'actionneur en fonction des conditions et/ou des procédures de vol. L'actionneur est un organe à motorisation électrique qui est relié au lest par l'intermédiaire d'un mécanisme de transmission mécanique, tel que du type à roue et vis sans fin. L'actionneur et le mécanisme de transmission mécanique sont logés à l'intérieur de la pale, l'actionneur étant alimenté en énergie électrique à partir du réseau de bord du giravion.

D'autres modalités de vrillage actif de la pale sont connues, telles qu'à partir d'une exploitation d'un élément à déformation de forme qui est en prise sur et/ou qui est incorporé dans la peau de la pale formant sa paroi extérieure et délimitant son extrados et son intrados. L'actionneur est par exemple du type piézoélectrique pour solliciter une déformation de l'élément et est alimenté en énergie à partir du réseau de bord du giravion. L'ampleur du vrillage de la pale varie selon la sollicitation de l'élément à se déformer, en étant provoquée par une activation des moyens piézoélectriques générée par les moyens de commande en fonction des conditions et/ou des procédures de vol. On pourra par exemple se reporter au document US2007205332 (ONERA) qui décrit un mécanisme de vrillage d'une pale de ce type.

Il est aussi connu d'implanter un volet articulé à l'extrémité libre d'une pale, et de le manoeuvrer en basculement en cours de vol à partir de moyens de commande qui sont activés par le pilote. Par exemple selon EP0734947 (INST ADV TECH HELICOPTER LTD) qui représent l'art antérieur le plus proche, un tel volet est exploité pour apporter de l'incidence à une pale. Le volet est manoeuvrable par un actionneur qui est logé à l'intérieur de la pale et qui est en relation avec le volet par l'intermédiaire d'un mécanisme de transmission à bielles articulées. L'actionneur est un organe moteur électrique de puissance qui est alimenté en énergie à partir d'un réseau de bord du giravion.

Un problème posé réside dans les modalités d'implantation à l'intérieur d'une pale, d'un mécanisme de vrillage actif du type apte à mettre sous contrainte en torsion la pale en fonction de commandes de vol opérées par le pilote. Il doit être pris en compte que l'espace disponible à l'intérieur de la pale est réduit et que l'incorporation du mécanisme de vrillage à la pale ne doit pas induire un déséquilibre ni perturber le comportement de la pale lorsqu'elle est entraînée en rotation. Par ailleurs, le mécanisme de vrillage doit être de faible encombrement mais néanmoins robuste et fiable, et son incorporation dans le volume intérieur de la pale doit être sécurisé compte tenu de l'environnement hostile dans lequel il est placé. En effet, le mécanisme de vrillage est soumis à des vibrations et à des sollicitations mécaniques élevées en raison de la rotation de la voilure tournante, et son installation à l'intérieur de la pale doit être adaptée en conséquence.

Les actionneurs exploités pour vriller les pales sont des organes de puissance électromécaniques ou piézoélectriques, dont la mise en oeuvre implique un regroupement de moyens structurels qui sont complexes et coûteux. De tels moyens structurels doivent procurer un fonctionnement fiable et sécurisé des actionneurs au regard de la nature électrique de leur source d'énergie et de l'environnement hostile dans lequel ils sont implantés. Les actionneurs sont des organes producteurs d'un mouvement dont la puissance développée doit être adaptée à une manoeuvre des organes de vrillage, en étant suffisante pour pourvoir déformer la surface d'extension de la pale et finalement l'ensemble de la pale. La structure des actionneurs est complexe, en étant composée de nombreux organes pesants et/ou encombrants, tels que des bobines, des aimants et des broches. L'alimentation en énergie électrique des actionneurs à partir du réseau de bord du giravion doit être sécurisée et fiable, et doit fournir une puissance adaptée à leur mise en oeuvre. L'énergie électrique est acheminée depuis le réseau de bord vers l'extrémité libre de la pale, au moyen de câbles encombrants et de sections conséquentes qui s'étendent à l'intérieur de la pale. Le passage des câbles entre l'axe de rotation du rotor et l'espace intérieur des pales implique l'installation de raccords électriques tournants, performants et sécurisés, qui sont coûteux. Un actionneur de type piézoélectrique est moins exigeant en puissance à fournir mais implique l'exploitation d'un courant à fort voltage, dont l'acheminement doit être sécurisé. L'environnement hostile de la pale en mouvement n'est pas favorable à l'utilisation de câbles de puissance véhiculant un courant à fort potentiel, ce qui est source de difficultés et de coûts importants pour agencer, sécuriser et entretenir un réseau électrique propre à l'alimentation en énergie de l'actionneur et logé à l'intérieur de la pale.

Il est encore connu, selon une technique éloignée du vrillage des pales d'une voilure tournante, d'exploiter une masselotte pour manoeuvrer des volets placés en bout de pale. Par exemple le document GB 627 117 vise un dispositif pour gérer un débit d'air expulsé en bout de pale équipant une voilure tournante d'un giravion. Ce dispositif comprend des tuyères qui sont équipées de volets d'obturation pour réguler le débit d'air qu'elles expulsent. Les volets sont manoeuvrables par un bras de levier qui est monté pivotant en bout de pale, et qui est porteur d'un contrepoids provoquant un pivotement du bras de levier à l'encontre d'un ressort de rappel.

On connaît aussi les documents DE 198 59 041 et EP 1 083 123.

Le but de la présente invention est de proposer un mécanisme de vrillage d'une pale que comporte une voilure tournante équipant un rotor pour giravion. Le mécanisme de vrillage est recherché fiable et sécurisé malgré l'environnement hostile auquel il est soumis en étant logé à l'intérieur de la pale. Le mécanisme de vrillage est aussi recherché de structure simple, et apte à être implanté sur la pale en évitant des aménagements complexes et coûteux nécessaires à sa mise en oeuvre.

Le mécanisme de la présente invention est un mécanisme de vrillage d'une pale de voilure tournante selon sa surface d'extension. Une telle voilure tournante équipe notamment un rotor pour giravion, et comprend une pluralité de pales qui sont entraînées en rotation par un moyeu du rotor en prise sur un arbre rotor. Le mécanisme de vrillage comporte une structure de montage sur la pale, un organe de vrillage qui est muni de moyens de prise sur la pale et un ensemble moteur. Le mécanisme de vrillage forme un ensemble qui est incorporable à la pale par l'intermédiaire de la structure de montage, en étant notamment logé dans le volume intérieur de la pale délimité entre son extrados et son intrados. L'organe de vrillage, voire aussi et de préférence l'ensemble du mécanisme de vrillage, est plus particulièrement intégrable par l'intermédiaire de la structure de montage à l'extrémité libre de la pale, afin d'optimiser les contraintes qu'il applique pour provoquer le vrillage de la pale. L'organe de vrillage est apte à appliquer une contrainte en torsion sur la pale pour provoquer son vrillage angulaire. L'ensemble moteur comprend un actionneur constituant des moyens moteurs qui sont producteurs d'un mouvement exploité pour manoeuvrer l'organe de vrillage, et des moyens de transmission du mouvement généré par l'actionneur vers l'organe de vrillage pour sa manoeuvre.

Le mécanisme de la présente invention est principalement reconnaissable en ce que l'actionneur est du type à force centrifuge, et comprend au moins une masselotte d'entraînement autour d'un axe de pivot d'un organe tournant qui est porteur de la masselotte. La masselotte est plus particulièrement placée sur l'organe tournant à distance radiale de son axe de pivot, pour induire une mise en rotation de l'organe tournant sous l'effet d'un couple moteur qui est généré par la masselotte soumise à une force centrifuge.

La force centrifuge à laquelle est soumise la masselotte est générée par la mise en rotation de la voilure tournante, et plus particulièrement par la mise en rotation de la pale porteuse du mécanisme autour de l'axe de rotation du rotor. L'actionneur est un moyen moteur mû par la masselotte qui génère un couple moteur d'entraînement de l'organe tournant autour de l'axe de pivot. Ce couple moteur est produit par l'énergie issue de l'entraînement de la voilure tournante en rotation par le rotor. L'énergie propre à l'entraînement de l'organe tournant autour de l'axe de pivot est procurée par la masselotte, en étant induite par la mise en rotation de la masselotte autour de l'axe de rotation du rotor. En effet, la masselotte, qui est portée par l'organe tournant lui-même monté sur la pale par l'intermédiaire de la structure de montage, est soumise à une force centrifuge induite par la mise en rotation de la voilure tournante. La masselotte étant disposée à distance radiale de l'axe de pivot de l'organe tournant, la force centrifuge à laquelle est soumise la masselotte génère un couple moteur sur l'organe tournant, qui provoque son pivotement autour de l'axe de pivot et en conséquence la manoeuvre de l'organe de vrillage par l'intermédiaire des moyens de transmission. La position angulaire de l'organe tournant par rapport à l'axe de pivot est dépendante du rapport entre le couple moteur généré par la masselotte et le couple résistant induit par la résistance de pale à l'encontre de son vrillage. L'organe tournant est un organe globalement plan, tel que conformé en disque ou analogue, qui est porté par la structure de montage de sorte que son plan soit disposé selon la surface d'extension de la pale. En situation d'implantation du mécanisme de vrillage sur la pale, l'axe de pivot est orienté perpendiculairement au plan global d'extension de la pale.

Le couple moteur étant généré à partir de la force centrifuge à laquelle est soumise la pale entraînée en rotation par le moyeu, l'actionneur est dispensé d'une alimentation en énergie spécifique en provenance des ressources propres du giravion, et notamment d'une alimentation en énergie électrique de puissance acheminée par une liaison filaire raccordée au réseau de bord du giravion. L'actionneur est structurellement simple et peu encombrant, fiable, peu coûteux et précis. La variation du couple moteur est susceptible d'être aisément procurée avec précision à partir d'un réglage de la position radiale de la masselotte sur l'organe tournant. Ce réglage est avantageusement à variation continue en fonction des besoins extemporanés de manoeuvre de l'organe de vrillage selon les conditions de vol du giravion, et plus particulièrement selon les modalités d'entraînement de la voilure tournante et selon la portance souhaitée que procure la pale. Une mobilité en translation radiale de la masselotte sur l'organe tournant peut être aisément procurée par un organe moteur de faible puissance, sans conférer à l'actionneur une structure complexe ni induire des aménagements coûteux propres à l'alimentation en énergie et à la commande de la mise en oeuvre d'un tel organe moteur de faible puissance affecté à la manoeuvre de la masselotte.

L'actionneur est apte à produire un mouvement tournant aisément transmissible à l'organe de vrillage par des moyens de transmission appropriés. Les capacités de mobilité de l'actionneur qui sont exploitées pour manoeuvrer l'organe de vrillage sont limitées à ce qui est nécessaire, un pivotement de l'organe tournant étant suffisant pour manoeuvrer l'organe de vrillage susceptible d'être formé d'un volet basculant ou d'un bras de torsion en prise sur la pale. Le mécanisme, ses moyens de mise en oeuvre et ses modalités d'incorporation à la pale sont structurellement simples et peu coûteux, et les risques de défaillance de l'actionneur sont minimisés.

L'organe tournant est muni de moyens de montage en pivotement sur la pale autour de l'axe de pivot, qui sont intégrés à la structure de montage de l'ensemble du mécanisme sur la pale. L'organe tournant est porté par la structure de montage autour d'un axe de pivot d'orientation transversale, perpendiculairement notamment, selon la surface d'extension de la pale en position d'installation de la structure de montage sur la pale. L'organe tournant est plus particulièrement porteur de la masselotte par l'intermédiaire de moyens de positionnement radialement excentrés de la masselotte par rapport à l'axe de pivot de l'organe tournant.

La position radiale de la masselotte est adaptée en continu selon les besoins de mise sous contrainte de la pale en torsion pour provoquer son vrillage, en fonction notamment des commandes de vol du giravion et plus particulièrement en fonction des modalités d'entraînement de la voilure tournante et des besoins en portance procurée par la pale. Le vrillage de la pale est obtenu à partir d'une manoeuvre en translation de la masselotte, dispensant d'une manoeuvre directe de l'organe de vrillage par un organe de puissance alimenté en énergie à partir d'une source extérieure à la pale. L'adaptation de la position radiale de la masselotte est susceptible d'être aisément procurée par des moyens de manoeuvre de la masselotte sur l'organe tournant suivant une trajectoire en translation radiale centrée sur l'axe de pivot. La mise en oeuvre des moyens de manoeuvre est avantageusement commandée en fonction des conditions de mise en rotation de la voilure tournante et/ou des commandes de vol opérées.

Plus particulièrement, la masselotte est avantageusement montée radialement mobile en translation sur l'organe tournant, entre une position neutre d'équilibrage et une position active d'entraînement en pivotement de l'organe tournant. En position neutre, la masselotte est centrée sur l'axe de pivot de sorte que l'effet de la force centrifuge sur la masselotte ne génère pas de couple moteur sur l'organe tournant. Le centrage de la masselotte est par exemple obtenu par une mise en position de la masselotte par rapport à l'axe de pivot de sorte que son centre de gravité soit placé sur l'axe du pivot. En position active, la masselotte est placée à distance radiale de l'axe de pivot et génère un couple moteur sur l'organe tournant sous l'effet de la force centrifuge. La masselotte en position active est excentrée par rapport à l'axe de pivot, son centre de gravité étant placé à distance radiale de l'axe de pivot.

Selon une forme de réalisation, les masselottes sont en pluralité et/ou par analogie la masselotte est composée d'une pluralité de masselottes élémentaires, en étant manoeuvrables indépendamment l'une de l'autre. En position neutre, les masselottes ou masselottes élémentaires sont placées à équidistance radiale de part et d'autre de l'axe de pivot. En position active, les masselottes ou masselottes élémentaires sont susceptibles d'être manoeuvrées indépendamment pour ajuster le couple moteur développé et/ou pour modifier le sens de pivotement de l'organe tournant. Les manoeuvres respectives des masselottes ou masselottes élémentaires sont susceptibles d'induire leurs déplacements à des distances radiales respectives de l'axe de pivot, en étant placées soit du même côté soit de part et d'autre de cet axe de pivot au cours de leur manoeuvre.

La masselotte est notamment équipée de moyens de manoeuvre en translation radiale sur l'organe tournant, dont la mise en oeuvre est placée sous la dépendance de moyens de commande d'un vrillage de la pale selon les besoins de portance que procure son profil et/ou selon les modalités d'entraînement en rotation de la voilure tournante. Les moyens de commande sont susceptibles d'être placés sous la dépendance de moyens d'évaluation d'un changement de régime du rotor et/ou d'être mis en oeuvre lors de phases spécifiques d'entraînement de la voilure tournante, pour réduire les nuisances sonores induites.

Les moyens de manoeuvre de la masselotte comprennent notamment au moins un organe moteur d'entraînement en mobilité de la masselotte le long d'un guide. Un tel organe moteur est un organe à faible puissance développée procurant un déplacement en translation de la masselotte sur l'organe tournant. La puissance de l'organe moteur est avantageusement restreinte à une puissance juste suffisante pour mouvoir la masselotte en translation à l'encontre seulement de son propre poids et des efforts de frottement induits par son déplacement le long du guide. Un tel organe moteur est notamment choisi à motorisation électrique, dont l'alimentation en énergie est fournie à partir du réseau de bord du giravion. L'organe moteur étant à faible puissance, les contraintes nécessaires à la sécurisation de son alimentation par un réseau filaire dédié sont réduites, ce qui facilite l'incorporation à la pale d'un tel réseau filaire. L'énergie électrique nécessaire à l'alimentation de l'organe moteur est susceptible d'être à basse tension et à faible ampérage, en étant acheminée depuis l'extrémité d'ancrage de la pale vers l'organe moteur par une liaison filaire de faible diamètre. L'implantation sécurisée de la liaison filaire à l'intérieur de la pale est facilement réalisée, et procure une fiabilité et une endurance de la liaison filaire qui sont performantes et néanmoins obtenues à moindres coûts.

L'organe moteur est de préférence un organe moteur tournant à motorisation électrique, mais est encore susceptible d'être d'un autre type en fonction par exemple des besoins de mise en mobilité et de la masse de la masselotte, du type de voilure tournante et/ou de l'envergure de la pale. Les besoins en énergie de l'organe moteur étant faibles, l'agencement et le type de l'organe moteur peuvent être librement choisis en fonction des besoins sans induire des aménagements complexes et coûteux du mécanisme et/ou de ses modalités d'incorporation à la pale. A titre d'exemples non limitatifs pris isolément ou en combinaison, l'organe moteur est susceptible d'être encore un organe à motorisation électromécanique, pneumatique, hydraulique, magnétique voire encore d'exploiter des éléments à changement de forme du type diélectrique ou magnétique, des éléments piézoélectriques, voire encore des fibres ou des corps déformables lorsqu'ils sont sollicités.

L'organe moteur est peu encombrant et léger, et peut être indifféremment porté par l'organe tournant ou par la masselotte ou encore par le guide. La liaison filaire d'alimentation en énergie de l'organe moteur à partir du réseau de bord du giravion s'étend aisément depuis l'extrémité d'ancrage de la pale vers l'organe moteur, en circulant par exemple à travers l'axe de pivot de l'organe tournant par l'intermédiaire d'un tourillon de montage.

Selon une forme de réalisation, l'organe moteur est un moteur tournant qui est en prise sur la masselotte par l'intermédiaire d'un mécanisme à vis et écrou et/ou roue coopérant. La vis est notamment ménagée au moins en partie le long du guide, et la masselotte est avantageusement munie de l'écrou et/ou de la roue. De telles modalités de mise en coopération entre l'organe moteur et la masselotte sont structurellement simples et légères.

L'organe tournant est avantageusement agencé en roue munie d'un organe de prise sur les moyens de transmission pour leur entraînement. Un tel organe de prise est notamment formé d'une denture apte à coopérer avec une denture complémentaire ménagée sur un organe de transmission, pignon et/ou crémaillère notamment, que comprennent les moyens de transmission.

Les moyens de transmission sont agencés en fonction des besoins et du volume disponible de la pale réservé à leur implantation. Selon la configuration de la pale, les moyens de transmission sont susceptibles de comprendre l'un au moins d'un mécanisme à renvoi d'angle et/ou d'un mécanisme à amplification d'efforts et/ou d'un mécanisme à modification d'amplitude de mouvement et/ou d'un mécanisme à conversion de mouvement entre un mouvement tournant et un mouvement translatif.

Selon une forme de réalisation, les moyens de transmission comprennent un mécanisme à crémaillère ou organe analogue apte à convertir le mouvement de pivot produit par l'actionneur en mouvement de translation. Un tel mécanisme de transmission mécanique distante permet de placer l'actionneur à une quelconque distance de l'organe de vrillage. Le mécanisme à crémaillère comporte par exemple un pignon qui est conjointement en prise avec l'organe tournant et avec une crémaillère de manoeuvre distante de l'organe de vrillage, directement ou par l'intermédiaire d'un mécanisme de transmission distante et/ou d'un mécanisme à conversion de mouvement.

Selon les modalités de manoeuvre de l'organe de vrillage, les moyens de transmission sont susceptibles d'être équipés de moyens de conversion du mouvement translatif de la crémaillère en mouvement tournant d'entraînement de l'organe de vrillage. Par exemple, les moyens de transmission sont susceptibles de comprendre un mécanisme de transmission à rampe hélicoïdale qui est interposé entre la crémaillère et l'organe de vrillage.

Selon une forme particulière de réalisation, la masselotte est composée d'au moins deux masselottes élémentaires qui sont montées mobiles en translation radiale sur l'organe tournant indépendamment l'une de l'autre. Un tel agencement de la masselotte permet en continu d'affiner le réglage de la position angulaire de l'organe tournant par rapport à l'axe de pivot et/ou de modifier le sens de pivotement de l'organe tournant. Les masselottes élémentaires sont par exemple manoeuvrées par des organes moteurs élémentaires que comprennent les moyens de manoeuvre et qui leur sont respectivement affectés, ou encore par un organe moteur commun par l'intermédiaire de chaînes cinématiques respectives qui leur sont affectées et qui sont aptes à être mues isolément ou conjointement. Les masselottes élémentaires sont de préférence manoeuvrées le long d'un guide commun, soit suivant une même direction le long du guide commun, soit suivant des directions opposées.

L'organe de vrillage est susceptible d'être d'un quelconque type, en étant formé d'un organe structurellement apte à être mis en prise conjointe sur la pale et sur l'actionneur, notamment par l'intermédiaire des moyens de transmission, pour induire une mise en torsion de la pale selon sa surface d'extension et en conséquence pour provoquer le vrillage de ladite pale. On notera que le mécanisme de l'invention qui vient d'être décrit est susceptible d'être par analogie appliqué à d'autres fonctions analogues à celle de manoeuvre de l'organe de vrillage, notamment dans le cas où l'organe de vrillage est agencé en volet de modification des profils correspondants de la pale.

Selon un exemple d'agencement de l'organe de vrillage, celui-ci est un volet qui est muni de moyens d'articulation en bord de pale, tel qu'en basculement sur le bord de fuite de la pale. De tels moyens d'articulation en prise sur le volet et sur la pale forment les moyens de prise.

Selon un exemple d'agencement de l'organe de vrillage, celui-ci est un bras de torsion qui est muni de moyens d'ancrage sur une paroi de la pale. Un tel bras de torsion est susceptible d'être conformé en élément allongé, tel qu'en levier basculant et/ou à renvoi d'angle, ou encore d'être conformé en élément de révolution coopérant par rotation par les moyens de transmission, et plus particulièrement par le mécanisme de transmission à rampe hélicoïdale associé au mécanisme à crémaillère. Les moyens d'ancrage constituent les moyens de prise de l'organe de vrillage sur la pale.

Le déplacement des masselottes à l'intérieur de la pale entraînée en rotation induit une modification de l'équilibre des forces inertielles en présence et en conséquence induit une modification du comportement dynamique de la pale. Pour éviter de telles modifications, le mécanisme de vrillage comprend de préférence un dispositif de compensation des effets du déplacement des masselottes sur le comportement dynamique de la pale. Selon une forme de réalisation du mécanisme de compensation, celui-ci comprend au moins une masselotte de compensation qui est montée en mobilité sur la pale, suivant une orientation de déplacement correspondante à la corde de la pale par exemple. La masselotte de compensation est en rupture de prise avec l'organe tournant sur lequel elle est inopérante, sa masse et sa mobilité sur la pale étant organisées pour compenser les effets induits par le déplacement de la ou des masselottes affectées à l'entraînement de l'organe tournant, au regard du comportement dynamique de la pale en elle-même.

Outre un mécanisme de vrillage, l'invention vise de plus une pale munie d'un tel mécanisme.

Des exemples de réalisation de la présente invention vont être décrits en relation avec les figures des planches annexées, dans lesquelles :
- la fig.1 est une vue schématique d'une pale de voilure tournante, qui est équipée d'un mécanisme de vrillage selon un exemple général de réalisation de la présente invention.
- la fig.2 est une illustration schématique détaillée d'un mécanisme de vrillage d'une pale de voilure tournante selon un exemple particulier de réalisation de la présente invention.
- la fig.3 est une vue schématique en perspective d'un mécanisme de vrillage d'une pale de voilure tournante selon un autre exemple particulier de réalisation de la présente invention.
- la fig.4 est composée de schémas « a » et « b » qui illustrent successivement des modalités de mises en oeuvre d'un mécanisme de vrillage de la présente invention comportant un couple de masselottes.
- la fig.5 est composée de schémas « c », « d », « e » et « f », qui illustrent successivement d'autres modalités de mises en oeuvre d'un mécanisme de vrillage de la présente invention comportant un couple de masselottes.

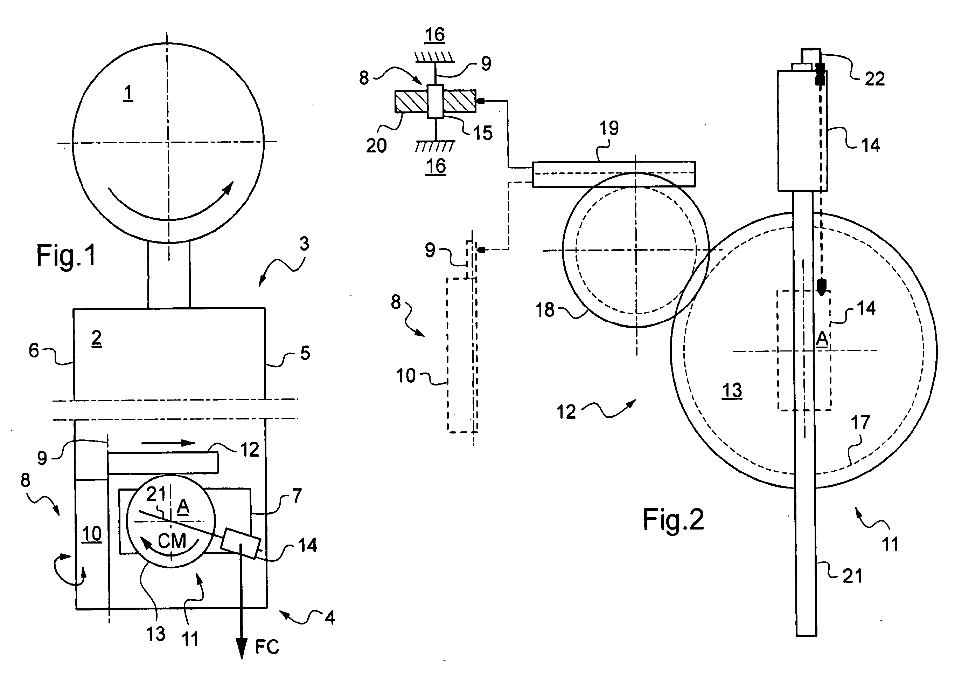

Sur la fig.1 un rotor pour giravion comporte une voilure tournante qui est entraînée en rotation à partir d'un moyeu 1 entraîné par un arbre. Cette voilure tournante est composée d'une pluralité de pales, telle que la pale 2 schématisée sur la figure. La pale 2 est une aile de grand allongement qui s'étend longitudinalement en envergure entre une extrémité d'ancrage 3 en prise sur le moyeu 1 et une extrémité libre 4 opposée à l'extrémité d'ancrage 3. Transversalement, la pale 2 s'étend entre un bord d'attaque 5 et un bord de fuite 6 suivant une corde. La paroi extérieure de la pale 2 est une peau ménageant son extrados et son intrados.

Sous certaines conditions de vol, il est utile de provoquer activement un vrillage de la surface d'extension de la pale 2 suivant sa dimension longitudinale. La pale 2 étant maintenue sur le moyeu 1 à son extrémité d'ancrage 3, une contrainte en torsion est appliqué sur la pale 2 entre ses extrémités et notamment au plus proche du bout de son extrémité libre 4. La mise sous contrainte de la pale 2 induit son vrillage suivant sa dimension longitudinale, pour modifier la position angulaire de ses profils aérodynamiques progressivement de l'une à l'autre de ses extrémités. La pale 2 incorpore à cet effet un mécanisme de vrillage, qui est installé dans son volume intérieur délimité entre son extrados et son intrados.

Le mécanisme de vrillage comporte une structure de montage 7 sur la pale 2, et met en oeuvre un organe de vrillage 8 qui est muni de moyens de prise 9 sur l'extrémité libre 4 de la pale 2. Sur l'exemple de réalisation illustré sur la figure, l'organe de vrillage 8 est formé d'un volet 10 basculant qui est articulé en bout de pale 2, à son extrémité libre 4 et sur son bord de fuite 6. L'articulation du volet 10 sur la pale 2 forme les moyens de prise 9, par l'intermédiaire desquels la pale 2 est mise sous contrainte en conséquence d'une manoeuvre en basculement du volet 10. L'organe de vrillage 8 est manoeuvré par un ensemble moteur, comprenant un actionneur 11 qui constitue des moyens moteurs producteurs d'un mouvement et qui est mis en relation mécanique distante avec l'organe de vrillage 8 par l'intermédiaire de moyens de transmission 12, pour renvoyer le mouvement produit par l'actionneur 11 vers l'organe de vrillage 8.

L'actionneur 11 associe principalement un organe tournant 13 et une masselotte 14 qui est portée par l'organe tournant 13 par l'intermédiaire d'un guide 21. L'organe tournant 13 est monté pivotant sur la structure de montage 7 autour d'un axe de pivot A orienté perpendiculairement à sa surface d'extension, et la masselotte 14 est apte à être placée à distance radiale de cet axe de pivot A tel qu'illustré.

Lorsque la voilure tournante est entraînée en rotation par le rotor, la pale 2 est soumise à une force centrifuge FC et chacun des composants que porte la pale 2 est soumis à cette force centrifuge FC proportionnellement à sa masse. La masselotte 14 est en conséquence soumise à une telle force centrifuge FC, qui induit un couple moteur CM centré sur l'axe de pivot A. L'amplitude de ce couple moteur CM est proportionnelle à la force centrifuge FC à laquelle est soumise la masselotte 14, et dépend de la vitesse de rotation de la pale 2, de la masse de la masselotte 14 et de la distance de séparation radiale entre la masselotte 14 et l'axe de pivot A. Ce couple moteur CM provoque un pivotement de l'organe tournant 13 autour de l'axe de pivot A, qui est exploité pour manoeuvrer l'organe de vrillage 13 par l'intermédiaire des moyens de transmission 12.

Sur la fig.2, un ensemble moteur est organisé pour manoeuvrer un organe de vrillage 8 d'une pale 2, selon le type de mécanisme à force centrifuge illustré sur la fig.1. L'ensemble moteur comprend l'organe tournant 13 qui est porteur d'une masselotte 14 et qui est en relation mécanique distance avec l'organe de vrillage 8 par l'intermédiaire de moyens de transmission 12. Les moyens de transmission 12 comprennent des mécanismes de conversion de mouvement qui sont successivement en prise les uns sur les autres, depuis l'organe tournant 13 vers l'organe de vrillage 8.

Selon une variante représentée en traits continus, l'organe de vrillage 8 est agencé en bras de torsion 15 muni à au moins l'une de ses extrémités de moyens de prise 9 qui sont agencés en moyens d'ancrage du bras de torsion 15 sur une paroi 16 de la pale 2, et notamment sur la peau formant la paroi extérieure de la pale 2. Le bras de torsion 15 est un élément conformé en cylindre qui est entraîné en rotation à partir des moyens de transmission 12. Selon une variante représentée en traits interrompus, l'organe de vrillage 8 est agencé en volet 10 basculant tel que selon l'exemple de réalisation illustré sur la fig.1, dont l'articulation constitue les moyens de prise 9 de l'organe de vrillage sur la pale 2.

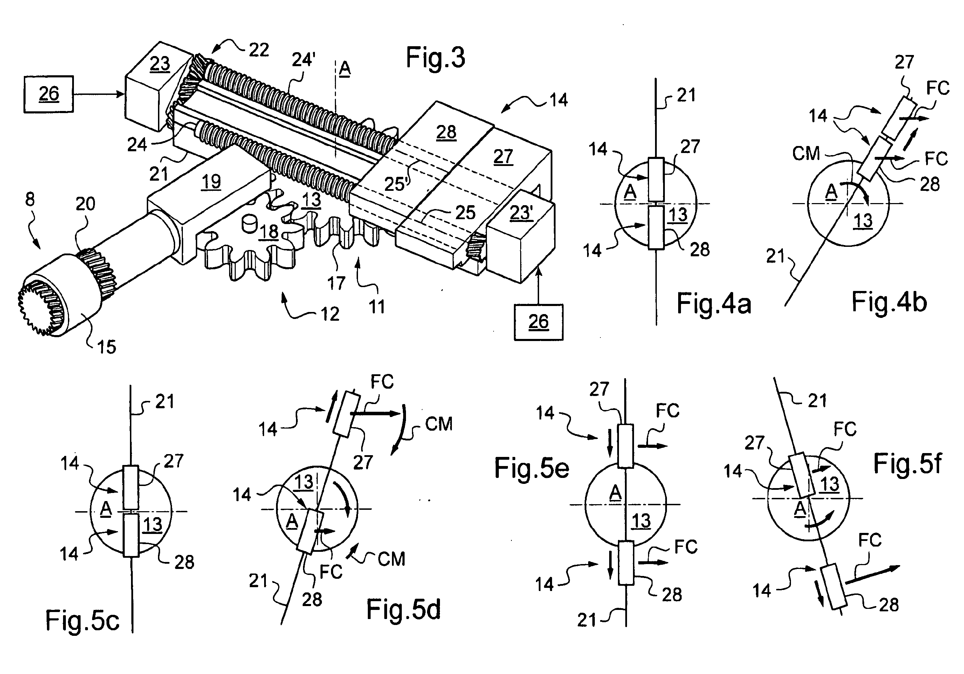

Sur les fig.2 et fig.3, l'organe tournant 13 est agencé en roue munie d'un organe de prise 17 sur les moyens de transmission 12, tel que formé par une denture ou analogue coopérant avec un pignon 18 que comprennent les moyens de transmission 12. Ce pignon 18 coopère avec une crémaillère 19 de transformation du mouvement tournant du pignon 18 en mouvement de translation. Un tel mouvement de translation est susceptible d'être exploité pour manoeuvrer l'organe de vrillage 8, notamment agencé en volet 10 basculant tel qu'illustré en traits interrompus. La crémaillère 19 est avantageusement disposée sur la pale 2 en étant orientée suivant la corde définissant son profil. Selon une forme de réalisation, la crémaillère 19 est par exemple guidée en translation le long d'un tube monté sur la structure porteuse, en étant mise en prise sur un arbre muni d'une rampe hélicoïdale 20. L'arbre à rampe hélicoïdale 20 forme un organe de transmission mécanique distante, et permet de convertir le mouvement de translation de la crémaillère 19 en mouvement de rotation. Ce mouvement de rotation est imprimé à un cylindre coopérant formant le bras de torsion 15, qui prend appui contre la paroi de la pale 2 pour imprimer une contrainte en torsion à la pale 2 à partir de la mise en rotation du cylindre.

La masselotte 14 est portée par l'organe tournant par l'intermédiaire d'un guide 21 qui s'étend radialement à l'organe tournant 13 en étant centré sur l'axe de pivot A. Des moyens de manoeuvre 22 sont exploités pour déplacer la masselotte 14 le long du guide 21, entre une position neutre d'équilibrage et une position active d'entraînement en pivotement de l'organe tournant 13. En position neutre, le guide est orienté suivant la corde de la pale qui s'étend entre son bord d'attaque et son bord de fuite. Sur la fig.2, la masselotte 14 est illustrée en position neutre en traits interrompus et en position active en traits continus. En position neutre, la masselotte 14 est centrée sur l'axe de pivot A et n'induit aucun couple moteur sur l'organe tournant 13. En position active, la masselotte 14 est radialement éloignée de l'axe de pivot A et génère un couple moteur CM entraînant l'organe tournant 13 en pivotement.

Sur la fig.3, La masselotte 14 est subdivisée en deux masselottes élémentaires 27,28 déplaçables par les moyens de manoeuvre 22 le long d'un guide commun 21. Les moyens de manoeuvre 22 comprennent deux organes moteurs 23,23' qui sont affectés à la manoeuvre d'une masselotte élémentaire 27,28 respective. Les organes moteurs sont portés en bout respectif du guide 21, et coopèrent avec un mécanisme de transmission du type à vis 24,24' et écrou 25,25' qui leurs sont affectés. Les organes moteurs 23,23' sont des organes moteurs tournants électriques de faible puissance, qui sont alimentés en énergie à partir du réseau de bord du giravion et dont la mise en oeuvre est placée sous la dépendance de moyens de commande 26. Les organes moteurs 23,23' sont en prise sur des vis 24,24' respectives, qui coopèrent avec des écrous 25,25' ménagés à travers la masselotte élémentaire 27,28 correspondante, pour provoquer son déplacement en translation radiale.

Sur les fig.3 et fig.4, la masselotte 14 est subdivisée en deux masselottes élémentaires 27,28 de mêmes masses, qui sont conjointement portées par un guide 21 commun dont est équipé l'organe tournant 13. Une subdivision de la masselotte 14 en une pluralité de masselottes élémentaires 27,28 permet d'optimiser le couple moteur CM induit à partir de l'exploitation de la masse globale de la masselotte 14, ou inversement de le restreindre à partir d'un déplacement combiné et adapté de l'une et/ou l'autre des masselottes élémentaires 27,28, et/ou encore d'inverser le sens de rotation de l'organe tournant 13. Le déplacement de l'une et/ou l'autre des masselottes élémentaires 27,28 permet de faire varier en continu et extemporanément les modalités de vrillage de la pale en fonction des besoins.

Sur la fig.4, les masselottes élémentaires 27,28 sont placées le long du guide 21 en différentes positions, respectivement illustrées sur les schémas « a » et « b ». Sur le schéma « a », les masselottes élémentaires 27,28 sont placées à équidistance de l'axe de pivot A de l'organe tournant 13, en position neutre de la masselotte 14. Sur le schéma « b », les masselottes élémentaires 27,28 sont déplacées conjointement suivant un même sens le long du guide en position active de la masselotte 14, en générant un couple moteur CM optimisé.

Sur la fig.5, les masselottes élémentaires 27,28 sont placées le long du guide 21 en différentes positions, respectivement illustrées sur les schémas « c » à « f ». Sur le schéma « c », les masselottes élémentaires 27,28 sont placées à équidistance de l'axe de pivot A de l'organe tournant 13, en position neutre de la masselotte 14. Sur le schéma « d », une première masselotte élémentaire 27 est déplacée suivant un premier sens le long du guide 21, pour générer le couple CM exploité pour l'entraînement de l'organe tournant 13. La deuxième masselotte élémentaire 28 étant maintenue en position initiale, le couple CM qu'elle développe, qui s'oppose à celui développé par la première masselotte élémentaire 27, est négligeable en raison de son maintien à proximité de l'axe de pivot A. Sur le schéma « e », les masselottes élémentaires 27,28 sont déplacées conjointement le long du guide 21 suivant un deuxième sens opposé au premier sens. Le couple moteur CM va réduire progressivement jusqu'à devenir nul en position neutre des masselottes élémentaires 27,28, telle qu'illustrée. Sur le schéma « f », le déplacement conjoint des masselottes élémentaires 27,28 suivant un deuxième sens est maintenu. Le couple moteur CM généré par la deuxième masselotte élémentaire 28 qui est manoeuvrée en éloignement de l'axe de pivot A tandis que la première masselotte élémentaire 27 en est rapprochée, provoque une inversion du sens de rotation de l'organe tournant 13.

Le déplacement séquentiel d'une masselotte 14 ou des masselottes élémentaires 27,28 le long du guide 21 de part et d'autre de l'axe de pivot A, permet d'obtenir une variation continue du vrillage de la pale en fonction des modalités d'entraînement en rotation de la voilure tournante et de la position radiale instantanée de la pale par rapport à l'orientation générale du giravion. Une régulation de la course individuelle et/ou conjointe des masselottes élémentaires le long du guide permet de réguler en continu l'amplitude instantanée de vrillage de la pale.

## Revendications

1. Mécanisme de vrillage d'une pale (2) de voilure tournante, le mécanisme de vrillage comportant une structure de montage (7) sur la pale (2), un organe de vrillage (8) muni de moyens de prise (9) sur la pale (2) et un ensemble moteur de manoeuvre de l'organe de vrillage (8), l'ensemble moteur comprenant un actionneur (11) et des moyens de transmission (12) du mouvement généré par l'actionneur (11) vers l'organe de vrillage (8) pour sa manoeuvre,
**caractérisé en ce que** l'actionneur (11) est du type à force centrifuge, et comprend au moins une masselotte (14) d'entraînement autour d'un axe de pivot (A) d'un organe tournant (13) porteur de la masselotte (14).

2. Mécanisme selon la revendication 1,
**caractérisé en ce que** l'organe tournant (13) est muni de moyens de montage (7) en pivotement sur la pale (2) autour d'un axe de pivot (A) d'orientation transversale à une surface d'extension de la pale (2).

3. Mécanisme selon l'une quelconque des revendications 1 à 2,
**caractérisé en ce que** l'organe tournant (13) est porteur de la masselotte (14) par l'intermédiaire de moyens (21,22) de positionnement radialement excentré de la masselotte (14) par rapport à l'axe de pivot (A) de l'organe tournant (13).

4. Mécanisme selon l'une quelconque des revendications 1 à 3,
**caractérisé en ce que** la masselotte (14) est montée radialement mobile en translation sur l'organe tournant (13), entre une position neutre d'équilibrage centrée sur l'axe de pivot (A) et une position active d'entraînement en pivotement de l'organe tournant (13) dans laquelle la masselotte (14) est excentrée par rapport à l'axe de pivot (A).

5. Mécanisme selon l'une quelconque des revendications 1 à 4,
**caractérisé en ce que** la masselotte (14) est équipée de moyens de manoeuvre (22) en translation radiale sur l'organe tournant (13) dont la mise en oeuvre est placée sous la dépendance de moyens de commande (26).

6. Mécanisme selon la revendication 5,
**caractérisé en ce que** les moyens de manoeuvre (22) de la masselotte (14) comprennent au moins un organe moteur (23) d'entraînement en mobilité de la masselotte (14) le long d'un guide (21).

7. Mécanisme selon la revendication 6,
**caractérisé en ce que** l'organe moteur (23) est indifféremment porté par l'organe tournant (13) ou par la masselotte (14) ou par le guide (21).

8. Mécanisme selon l'une quelconque des revendications 6 et 7,
**caractérisé en ce que** l'organe moteur (23) est un moteur tournant en prise sur la masselotte (14) par l'intermédiaire d'un mécanisme à vis (24,24') et écrou (25,25'), la vis (24,24') étant ménagée au moins en partie le long du guide (21) et la masselotte (14) étant munie de l'écrou (25,25').

9. Mécanisme selon l'une quelconque des revendications 1 à 8,
**caractérisé en ce que** l'organe tournant (13) est agencé en roue munie d'un organe de prise (17) sur les moyens de transmission (12) pour leur entraînement.

10. Mécanisme selon l'une quelconque des revendications 1 à 9, **caractérisé en ce que** les moyens de transmission (12) comprennent l'un au moins d'un mécanisme à renvoi d'angle et/ou d'un mécanisme à amplification d'efforts et/ou d'un mécanisme à modification d'amplitude de mouvement et/ou d'un mécanisme à conversion de mouvement entre un mouvement tournant et un mouvement translatif.

11. Mécanisme selon l'une quelconque des revendications 1 à 10,
**caractérisé en ce que** les moyens de transmission (12) comprennent un mécanisme à crémaillère, comportant un pignon (18) qui est conjointement en prise avec l'organe tournant (13) et avec une crémaillère (19) de manoeuvre de l'organe de vrillage (8).

12. Mécanisme selon la revendication 11,
**caractérisé en ce que** les moyens de transmission (12) comprennent un mécanisme de transmission à rampe hélicoïdale (20) interposé entre la crémaillère (19) et l'organe de vrillage (8).

13. Mécanisme selon l'une quelconque des revendications 1 à 12,
**caractérisé en ce que** la masselotte (14) est composée d'au moins deux masselottes élémentaires (27, 28) qui sont montées mobiles en translation radiale sur l'organe tournant (13) indépendamment l'une de l'autre.

14. Mécanisme selon l'une quelconque des revendications 1 à 13,
**caractérisé en ce que** l'organe de vrillage (8) est un volet (10) muni de moyens d'articulation en bord de pale, qui forment les moyens de prise (9).

15. Mécanisme selon l'une quelconque des revendications 1 à 14,
**caractérisé en ce que** l'organe de vrillage (8) est agencé en bras de torsion (15) muni de moyens d'ancrage sur au moins une paroi (16) de la pale (2), qui forment les moyens de prise (9).

16. Pale (2) d'aéronef,
**caractérisée en ce qu'**elle comporte un mécanisme selon l'une quelconque des revendications 1 à 15.

## Patentansprüche

1. Mechanismus zum Verdrehen eines Rotorblatts (2) eines Drehflügels, wobei der Verdrehmechanismus einen Aufbau zur Montage (7) auf dem Rotorblatt (2), ein Verdrehorgan (8) mit Mitteln zum Greifen (9) auf dem Rotorblatt (2) und eine Motoranordnung zum Antreiben des Verdrehorgans (8) aufweist, wobei die Motoranordnung ein Betätigungselement (11) und Übertragungsmittel (12) für die Bewegung aufweist, die durch das Betätigungsmittel (11) zu dem Verdrehorgan (8) hin erzeugt wird, um dieses zu manövrieren,
**dadurch gekennzeichnet, dass** das Betätigungsmittel (11) von einem Typ ist, welcher mit Zentrifugalkraft arbeitet und mindestens ein Ausgleichsgewicht (14) aufweist zum Antreiben eines Drehorgans (13) um eine Schwenkachse (A), wobei das Drehorgan das Ausgleichsgewicht (14) trägt.

2. Mechanismus nach Anspruch 1,
**dadurch gekennzeichnet, dass** das Drehorgan (13) mit Montagemitteln (7) versehen ist, die auf dem Rotorblatt (2) um eine Schwenkachse (A) mit einer Ausrichtung quer zu einer Erstreckungsfläche des Rotorblatts (2) drehbar gelagert sind.

3. Mechanismus nach einem der Ansprüche 1 bis 2,
**dadurch gekennzeichnet, dass** das Drehorgan (13) das Ausgleichsgewicht (14) mittels Positionierungsmitteln (21, 22) trägt, die das Ausgleichsgewicht (14) radial exzentrisch gegenüber der Schwenkachse (A) des Drehorgans (13) tragen.

4. Mechanismus nach einem der Ansprüche 1 bis 3,
**dadurch gekennzeichnet, dass** das Ausgleichsgewicht (14) radial translatorisch beweglich auf dem Drehorgan (13) zwischen einer neutralen, auf der Schwenkachse (A) zentrierten Gleichgewichtslage und einer aktiven Schwenkantriebslage des Drehorgans (13), in der das Ausgleichsgewicht (14) exzentrisch relativ zu der Schwenkachse (A) angeordnet ist, montiert ist.

5. Mechanismus nach einem der Ansprüche 1 bis 4,
**dadurch gekennzeichnet, dass** das Ausgleichsgewicht mit Mitteln (22) zur Ausübung einer radialen Translationsbewegung auf das Drehelement (13) versehen ist, dessen Betätigung von Steuermitteln (26) abhängt.

6. Mechanismus nach Anspruch 5,
**dadurch gekennzeichnet, dass** die Betätigungsmittel (22) des Ausgleichsgewichts (14) mindestens ein Motororgan (23) aufweisen zum Antreiben des Ausgleichsgewichts (14) entlang einer Führung (21).

7. Mechanismus nach Anspruch 6,
**dadurch gekennzeichnet, dass** das Motororgan (23) gleichermaßen von dem Drehorgan (13) oder dem Ausgleichsgewicht (14) oder der Führung (21) getragen sein kann.

8. Mechanismus nach einem der Ansprüche 6 und 7,
**dadurch gekennzeichnet, dass** das Motororgan (23) ein Drehmotor ist, der mit dem Ausgleichsgewicht (14) über einen Schrauben(24, 24')- und Muttern(25, 25')-Mechanismus in Eingriff steht, wobei die Schraube (24, 24') mindestens teilweise entlang der Führung (21) angeordnet ist, und das Ausgleichsgewicht (14) mit der Schraubenmutter (25, 25') versehen ist.

9. Mechanismus nach einem der Ansprüche 1 bis 8,
**dadurch gekennzeichnet, dass** das Drehorgan (13) als Rad ausgebildet ist, welches mit einem Greiforgan (17) auf den Übertragungsmitteln (12) für deren Antrieb angeordnet ist.

10. Mechanismus nach einem der Ansprüche 1 bis 9,
**dadurch gekennzeichnet, dass** die Übertragungsmittel (12) mindestens ein Winkelgetriebe und/oder einen Kraftverstärkungsmechanismus und/oder einen Mechanismus zur Veränderung einer Bewegungsamplitude und/oder einen Mechanismus zur Umwandlung von Bewegung zwischen einer Drehbewegung und einer Translationsbewegung aufweisen.

11. Mechanismus nach einem der Ansprüche 1 bis 10,
**dadurch gekennzeichnet, dass** die Übertragungsmittel (12) einen Zahnstangenmechanismus aufweisen mit einem Zahnrad (18), welches gleichzeitig mit dem Drehorgan (13) und der Zahnstange (19) zur Betätigung des Verdrehorgans (8) in Eingriff steht.

12. Mechanismus nach Anspruch 11,
**dadurch gekennzeichnet, dass** die Übertragungsmittel (12) einen Übertragungsmechanismus mit einer Wendelrampe (20) aufweisen, der zwischen der Zahnstange (19) und dem Verdrehorgan (8) angeordnet ist.

13. Mechanismus nach einem der Ansprüche 1 bis 12,
**dadurch gekennzeichnet, dass** das Ausgleichsgewicht (14) aus mindestens zwei Elementarausgleichsgewichten (27, 28) zusammengesetzt ist, die radial translatorisch beweglich auf dem Drehorgan (13) unabhängig voneinander angeordnet sind.

14. Mechanismus nach einem der Ansprüche 1 bis 13,
**dadurch gekennzeichnet, dass** das Verdrehorgan (8) eine Klappe (10) ist, die mit Gelenken am Rand des Rotorblatts versehen ist, die die Greifmittel (9) bilden.

15. Mechanismus nach einem der Ansprüche 1 bis 14,
**dadurch gekennzeichnet, dass** das Verdrehorgan (8) als Torsionsarm (15) ausgebildet ist, der mit Befestigungsmitteln, die die Greifmittel (9) bilden, auf mindestens einer Fläche (16) des Rotorblatts (2) versehen ist.

16. Rotorblatt (2) eines Flugzeugs,
**dadurch gekennzeichnet, dass** es einen Mechanismus nach einem der Ansprüche 1 bis 15 aufweist.

## Claims

1. Twist mechanism for twisting a rotary-wing blade (2), the twist mechanism comprising a mounting structure (7) for mounting it on the blade (2), a twist member (8) provided with engagement means (9) for engaging on the blade (2), and a drive assembly for moving the twist member (8), the drive assembly comprising ar actuator (11) and transmission means (12) for transmitting the movement generated by the actuator (11) to the twist member (8) for moving it,
**characterised in that** the actuator (11) is of the centrifugal force type, and it comprises at least one flyweight (14) for driving a rotary member (13) carrying the flyweight (14) about a pivot axis (A).

2. Mechanism according to Claim 1,
**characterised in that** the rotary member (13) is provided with mounting means (7) for mounting it on the blade (2) to pivot about a pivot axis (A) oriented transversely to a surface of extension of the blade (2).

3. Mechanism according to any one of Claims 1 to 2,
**characterised in that** the rotary member (13) carries the flyweight (14) via means (21,22) for radially positioning the flyweight (14) off-centre relative to the pivot axis (A) of the rotary member (13).

4. Mechanism according to any one of Claims 1 to 3,
**characterised in that** the flyweight (14) is mounted to move radially in translation on the rotary member (13), between a neutral equilibrium position centred on the pivot axis (A) and an active drive position for pivoting the rotary member (13), in which position the flyweight (14) is off-centre relative to the pivot axis (A).

5. Mechanism according to any one of Claims 1 to 4,
**characterised in that** the flyweight (14) is equipped with movement means (22) for moving it in radial translation on the rotary member (13), use of the movement means being placed under the control of control means (26).

6. Mechanism according to Claim 5,
**characterised in that** the movement means (22) for moving the flyweight (14) comprise at least one drive member (23) for moving the flyweight (14) along a guide (21).

7. Mechanism according to Claim 6,
**characterised in that** the drive member (23) is carried either by the rotary member (13) or by the flyweight (14) or by the guide (21).

8. Mechanism according to any one of Claims 6 and 7,
**characterised in that** the drive member (23) is a rotary motor in engagement with the flyweight (14) via a mechanism having a screw (24,24') and a nut (25,25'), the screw (24,24') being provided at least in part along the guide (21) and the flyweight (14) being provided with the nut (25,25').

9. Mechanism according to any one of Claims 1 to 8, **characterised in that** the rotary member (13) is arranged as a wheel provided with an engagement member (17) for engaging with the transmission means (12) so as to drive them.

10. Mechanism according to any one of Claims 1 to 9,
**characterised in that** the transmission means (12) comprise at least one of a bell-crank mechanism and/or a force-amplification mechanism and/or a mechanism for modifying movement amplitude and/or a mechanism for converting movement between a rotary movement and a translatory movement.

11. Mechanism according to any one of Claims 1 to 10,
**characterised in that** the transmission means (12) comprise a rack mechanism, having a pinion (18) which is in engagement jointly with the rotary member (13) and with a rack (19) for moving the twist member (8).

12. Mechanism according to Claim 11,
**characterised in that** the transmission means (12) comprise a helical-groove transmission mechanism (20) interposed between the rack (19) and the twist member (8).

13. Mechanism according to any one of Claims 1 to 12,
**characterised in that** the flyweight (14) is made up of at least two elementary flyweights (27,28) which are mounted to move in radial translation on the rotary member (13) independently of each other.

14. Mechanism according to any one of Claims 1 to 13, **characterised in that** the twist member (8) is a flap (10) provided with hinge means for hinging to a blade edge, which hinge means form the engagement means (9).

15. Mechanism according to any one of Claims 1 to 14,
**characterised in that** the twist member (8) is arranged as a torsion arm (15) provided with anchor means for anchoring to at least one wall (16) of the blade (2), which anchor means form the engagement means (9).

16. Aircraft blade (2),
**characterised in that** it comprises a mechanism according to any one of Claims 1 to 15.
